# EUROPEAN PATENT SPECIFICATION

(11) **EP 0 773 557 B1**
(45) Date of publication and mention of the grant of the patent: **15.03.2000**
(21) Application number: 96402418.6
(22) Date of filing: 13.11.1996
(51) Int. Cl.: H01B 7/29, H01B 3/30, C08G 73/18

(54) **Heat-resistant electrical wire comprising a benzimidazole-based polymer coating**
Wärmebeständiger, leitfähiger Draht mit einer Benzimidazolpolymer enthaltenden Beschichtung
Fil conducteur résistant à la chaleur comportant un revêtement polymère à base de benzimidazole

(30) Priority: 13.11.1995 JP 29423495
(43) Date of publication of application: 14.05.1997
(73) Proprietor: SUMITOMO WIRING SYSTEMS, LTD., Yokkaichi City Mie 510 (JP)
(72) Inventor: Onishi, Yasuhiko, c/o Sumitomo Wiring Systems, Ltd, Yokkaichi-city, Mie 510 (JP)
(74) Representative: Bertrand, Didier

(56) References cited:
- EP-A- 0 566 148
- US-A- 4 665 281
- US-A- 5 468 557

## Description

The present invention relates to a heat-resistant electrical wire and a heat-resistant insulating material which can be used independently from the wire. This material can be applied, for example, to an enamelled electrical wire which is required to have a high heat resistance.

The invention relates also to a method of manufacturing such a heat-resistant electrical wire and use thereof.

There already exist heat-resistant electrical wires such as polyimide coated wires, enamelled wires and highly heat-resistant cemented enamelled wires. However, the maximal temperatures of use for polyimide coated electrical wire, enamelled electrical wire and highly heat-resistant cemented enamelled wire are respectively 250°C, 150 to 220°C and 220°C, the temperature limit being therefore 250°C at the most.

Therefore, there is currently research into a heat-resistant electrical wire having high heat resistance, i.e. resistant to temperatures above 250°C. The present inventors have already developed an electrical wire coated with a film obtainable by reacting benzimidazole-based polymers (hereinafter referred to as PBI) and which is described in a Japanese patent application No. Heisei 4-124342. In this application, a polymer PBI having high heat resistance was applied on an exposed electrical wire or an electrical wire covered with insulating coatings, and the polymer was then baked to form a PBI film.

Such a PBI coated electrical wire has a high heat resistance, showing a softening temperature at temperatures above 350°C. However, at high temperature, it tends to be partially oxidised by air, so that, depending on the conditions of use, such a coated wire cannot yield the full advantages of its heat resistance, voltage resistance, flexibility and other features.

It is therefore an object of the present invention to improve the above-mentioned PBI film coated electrical wire or the like, so as to obtain a heat-resistant electrical wire or insulating material that fully displays the advantageous characteristics inherent to the polymer PBI, such as high heat resistance.

It is another object of the invention to provide methods of use of such electrical wires or insulating materials, as well as a manufacturing process for such materials and wires.

To this end, the invention provides a heat-resistant insulating material for an element containing at least an electrically conductive part, the material comprising:
- a first layer comprised of a benzimidazole-based polymer, the layer having a first face adapted to confront the element, and a second face; and
- a second layer comprised of a ceramic material, the second layer being securely fixed to the second face of the first layer.

The second layer may be comprised of a ceramic material and an organic or inorganic silicon-containing compound.

The benzimidazole-based polymer in the first layer may comprise a product obtainable by reacting a plurality of benzimidazole-based polymers of formula (I): 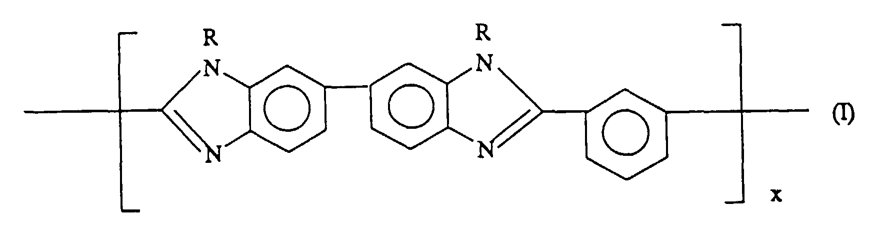 where R indicates an atom or a group chosen from the member consisting of a hydrogen atom and an alkyl group having 1 to 4 carbon atoms, and x indicates an integer equal to at least 5 and chosen to yield solvent-soluble polymers. x may be the same or different for each of the plurality of polymers and its maximum value is usually about 3,500.

The ceramic material in the second layer may comprise a compound represented by formula (II) :

MₖO_{I} (II)

where M, O, k and I indicate respectively a metallic element, an oxygen atom, an integer chosen from the group consisting of 1 and 2, and an integer chosen from the group consisting of 1, 2 and 3.

The heat-resistant insulating material of the invention may contain simultaneously a first layer comprised of a product obtainable by reacting a plurality of benzimidazole-based polymers of formula (I) and a second layer comprised of a ceramic material of formula (II).

The element containing at least an electrically conductive part may be either an electrical wire or an electrical wire coated with an insulating layer.

The invention also provides a heat-resistant electrical wire comprising:
- a wire portion containing at least an electrically conductive part;
- a first coating comprised of a benzimidazole-based polymer, the coating circumferentially coating the wire portion; and
- a second coating comprised of a ceramic material, the second coating circumferentially coating the first coating;
the wire portion, the first coating and the second coating being securely fixed.

The second coating may be comprised of a ceramic material and an organic or inorganic silicon-containing compound.

The benzimidazole-based polymer in the first coating may comprise a product obtainable by reacting a plurality of benzimidazole-based polymers of formula (I).

Independently of the composition of the first coating, the ceramic material in the second coating may comprise a compound represented by formula (II).

In one embodiment, the electrical wire may combine the first coating containing the product obtainable by reacting a plurality of benzimidazole-based polymers of formula (I) with the second coating containing the ceramic material of formula (II).

The wire portion containing at least an electrically conductive part may be an electrical wire. However, it can also be an electrical wire coated with an insulating layer.

Further, the present invention provides a method of manufacturing a heat-resistant insulating material for an element containing at least an electrically conductive part, the material comprising a first layer comprised of a product obtainable by reacting a plurality of benzimidazole-based polymers, the layer having a first face adapted to confront the element, and a second face; and a second layer comprised of a ceramic material, the method comprising the steps of:
a) preparing a vanish solution containing at least a plurality of benzimidazole-based polymers;
b) containing the solution in a shape adapted to confront the element;
c) reacting a plurality of benzimidazole-based polymers, thereby obtaining the first layer having the first and second faces; and
d) coating the second face of the first layer with the second layer comprised of a ceramic material, so as to be secured on the first layer.

There is also provided a method of manufacturing a heat-resistant electrical wire of the type comprising: a wire portion containing at least an electrically conductive part; a first coating comprised of a product obtainable by reacting a plurality of benzimidazole-based polymers, the first coating circumferentially covering the wire portion; and a second coating comprised of a ceramic material, the second coating covering the first coating, the method comprising the steps of:
a) preparing a varnish solution containing at least a plurality of benzimidazole-based polymers;
b) applying the solution to the circumferential surface of the wire portion;
c) reacting a plurality of benzimidazole-based polymers, thereby forming the first coating securely on the wire portion;
d) repeating, where appropriate, steps b) and c), thereby reinforcing the first coating; and
e) covering the first coating with the second coating comprised of a ceramic material, so as to be secured on the first coating.

The above first and second methods may further comprise the step of adding a radical-polymerisation initiating agent to the solution in step a), when a plurality of benzimidazole-based polymers has a low degree of polymerisation.

In one embodiment, step e) in the above second method may consist mainly in preparing a vamish solution containing at least a ceramic material, applying the ceramic varnish solution to the wire portion covered with the first coating, baking the ceramic varnish solution and repeating, where appropriate, the application and baking, thereby reinforcing the second coating.

The varnish solution may be prepared from at least the ceramic material and an organic silicon-containing compound.

In another embodiment, step e) in the above method may consist mainly in preparing a paste containing at least the ceramic material and extruding the paste around the first coating.

The paste may be prepared from at least the ceramic material and an inorganic silicon-containing compound.

The heat-resistant electrical wire thus manufactured may be used in electrical circuitry for an aircraft, for high voltage cables, communications applications, electrical heaters or similar that require high heat resistance.

The above and other objects, features and advantages of the invention will be made apparent from the following description of the preferred embodiments, given as a non-limiting example, with reference to the accompanying drawings, in which:
- figure 1 shows a transversal cross-sectional view of a heat-resistant electrical wire according to the invention, manufactured from a non-coated electrical wire;
- figure 2 shows a transversal cross-sectional view of a heat-resistant electrical wire according to the invention, manufactured from an electrical wire coated with an insulating layer; and
- figure 3 shows schematically a process for applying a benzimidazole-based polymer coating.

The expression ceramic coating or layer used in the present invention is to be taken in a broad sense to include not only a film entirely composed of ceramic, but also e.g. metallic films in which only a surface side is formed into ceramic.

In the following, benzimidazole-based polymer is indicated by the acronym PBI.

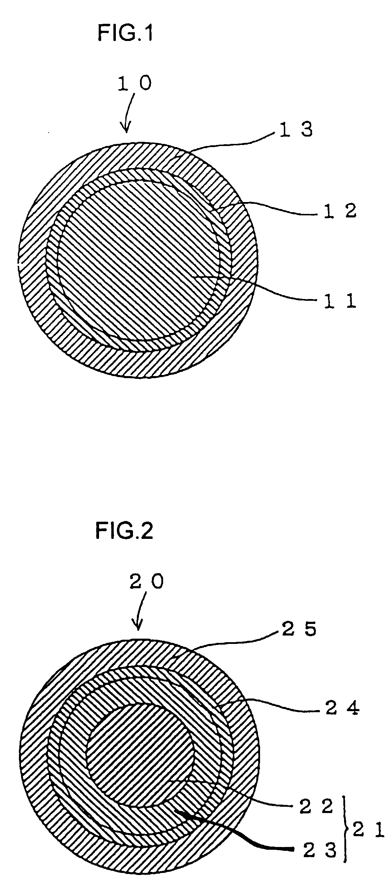

Figure 1 shows a heat-resistant electrical wire 10 wherein an exposed electrical wire 11 as conductor is coated with a film 12 made of PBI polymer.

The PBI film 12 is then coated with a ceramic film 13. The PBI film 12 confers a high heat resistance, whilst the ceramic film 13 enables the PBI film 12 to maintain this quality by protecting it from air contact and subsequent air oxidation.

The heat-resistant electrical wire 10 is prepared essentially by the following methods: firstly, a PBI is dissolved in a predetermined solvent, thereby preparing a PBI varnish solution. When the PBI has a low degree of polymerisation, a radical-polymerisation initiating agent is also added, if necessary, during the varnish solution preparation. The solvent for varnish solution preparation includes a basic solvent such as dimethylacetamide(DMA), dimethylformamide (DMF) and pyridine, or a hydrogen-bonding shielding solvent such as dimethylsulphoxide (DMSO).

The varnish concentration may vary from 1% to 80% (weight/volume), but is preferably in the range from 5% to 40% (w/v).

The radical-polymerisation initiating agent may include, for example, benzoyl peroxide, lauroyl peroxide, di-t-butyrophthalate peroxide, azo-bis-isobutyronitrile (AIBN), phenylazoarylsulphonic acid, N-nitroso-N-acyl compound, etc.

The radical-polymerisation initiator is added to the PBI varnish solution, in order to neutralise polymerisation-inhibiting agents that may be initially added to a varnish solvent such as DMA and also to induce a stacking of PBI molecules. Therefore this addition may promote the cross-linking reaction of PBI at heat, and eventually further polymerization, which occurs during the baking treatment (explained infra), and forms a sufficiently strong PBI film.

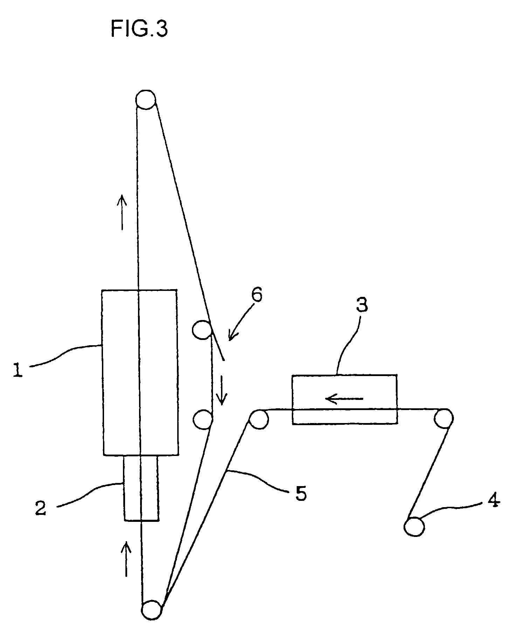

The PBI varnish solution is applied to the surface of a bare electrical wire 11 and is baked onto the latter. The baking treatment is usually effected by repeating alternately the application of varnish solution and baking, and causes cross-linking and/or further polymerization of base polymers PBI. Figure 3 shows an apparatus for implementing the above process comprising: a baking furnace 1, an applying unit 2, a continuous annealing furnace 3 and a coil winding unit 4. In this device, a wire 5 such as an electrical conductor, a coated electrical wire etc., that is initially wound on the coiling unit 4, is uncoiled therefrom, annealed in the continuous annealing furnace 3, sent to the applying unit 2 and applied with the varnish solution, and then sent to the baking fumace 1 where the vamish is adhered to the wire by baking.

Further, the varnish-baked wire 5 is processed repeatedly through the applying unit 2 and the baking furnace 1, thereby repeatedly submitted to the varnish application and the baking. The wire covered with the PBI film is then recovered from a delivering unit (6).

According to general handling processes, when the bare electrical wire 11 has a diameter less than 0.6 mm, the applying unit may be a horizontal fumace, whilst, when the diameter is larger than 0.6 mm, a vertical furnace may be used.

This principle may be applied for the PBI coating and baking according to the present invention, by choosing the type of furnace depending on the circumstances. It is possible to appropriately modify the application frequency, the baking temperature, the application speed according to the type of varnish to be baked and the type of baking furnace.

The application frequency may vary from once to several hundred times, but is more appropriately in the range from 2 to 20 times.

The baking temperature may be chosen between room temperature and 1,000°C, but is preferably in the range between 500°C and 800°C.

As has been seen, the electrical wire is first coated with the PBI film 12, then the outer surface of the film is further coated with a ceramic material, thereby forming a ceramic film 13. The ceramics used in the invention are comprised of refractory materials having the formula (II) supra. In the case of common industrial refractories, M in formula (II) usually represents Al, Ca, Cr, Mg, Si, or Zr or a mixture thereof to form a mono-metal or pluri-metal oxide.

Basic refractories of type MO, corresponding to formula (II) where k = 1 and I = 1, include e.g. magnesia, dolomite, calcia and zinc oxide.

Acid refractories of type MO₂, corresponding to formula (II) where k = 1 and I = 2, include for example silica (SiO₂), zirconium oxide, titanium oxide and tin oxide.

Neutral refractories of type M₂O₃, corresponding to formula (II) where k = 2 and I = 3, typically include alumina-, chromia- or spinel-type refractories, etc. which contain Al₂O₃ or Cr₂O₃ as an essential component. The mixture oxides of these materials may also be used as a ceramic, including natural products such as mica. In practice, these oxides are combined with non-oxidised metals. Then these metals may be oxidised only on the surface. However, this phenomenon does not seem to impede their function as refractory material.

A ceramic having the above formula (II) may be made into a powder-paste varnish by using a silicone-type binder. The silicone-type binder contains abundantly organic groups such as the methyl group, so that the adhesion of the varnish to a PBI layer is improved. Moreover, ceramic particles in ceramic powder are modified to form a scale-like structure, so that the surface is increased in relation to the thickness and the coating obtained becomes more impervious to water and air.

In the above embodiment, the ceramic adhesion to the PBI coating is improved and the overall coating adhesivity to the conductor wire is good. However, compared with the breakdown voltage of about 5.0 kV for a single PBI coating, the corresponding figure after ceramic coating could not exceed 1.5 kV. This seems to be caused by a surface electrical current flow occurring on the ceramic coating. In order to suppress this current flow, the ceramic coating on the end portion of the PBI and ceramic coated wire was removed by solvent. After this treatment, the breakdown voltage of the ceramic coating was greatly improved and ranged from 3.4 to 4.6 kV.

A thixotropy-enhancing agent, added to the varnish in order to improve paintability, caused the coating to be partially eccentric. To avoid this phenomenon, the orientation tendency of the varnish was increased by conferring a more non-Newtonian nature to the varnish. To dilute the varnish, xylene and toluene was used depending on the case.

The silicone binder comprises, as base polymers, organopolysiloxanes where siloxane bonding Si-O-Si constitutes the polymer skeleton and organic groups are bonded to the silicon atoms. The ceramic of formula MₖO_{I} having high melting temperature is then dispersed in this silicone binder. Baking and adhering this dispersed mixture on an electrical wire gives a highly flexible wire.

The above baked electrical wire is transformed by coiling or other operations and allowed to stand at a temperature above 400°C. The silicone resin and ceramic are then completely sintered, to give a highly heat-resistant, heat-cycle resistant and anti-wear ceramic sinter.

Normally, a ceramic-type varnish prepared with the silicone binder does not adhere well to metallic conductor. The sole possible technology known to date was therefore to extrude a mixture of silicone binder and dispersed ceramics on the conductor.

The dispersed ceramic can serve as a pigment. Typical examples of colouring pigment used in silicone-type paints are as follows:
- black colour type : Cr₂O₃, NiO, MnO₂, Fe₃O₄, etc. and the mixture thereof which are baked at 700°C or above;
- white colour type: titanium oxide (TiO₂) and zinc white (ZnO);
- red colour type: rouge (Fe₂O₃) which shows different colours depending on the baking conditions;
- yellow colour type: titanium yellow (TiO.NiO.Sb₂O₃) which shows a high resistance to acid and alkali.
- green colour type: chromium oxide (Cr₂O₃) which is highly resistant to heat, acid and alkali, cobalt green (CoO.ZnO) which has a high heat resistance.
- blue colour type: cobalt blue (CoO.nAl₂O₃) which is resistant up to 500°C;
- silver colour type: Alumina (Al₂O₃), etc.

Processes for preparing such a ceramic coating include the physical vapor deposition (PVD), chemical vapor deposition (CVD), extrusion and coating-baking methods. In the following, only the coating-baking method and the extrusion method are described, but the other methods may also be used for the purpose of the invention.

In the coating-baking method, which is the simplest amongst the above-mentioned methods, baking of a ceramic paint on a bare or insulated electric wire conductor is usually effected by repeated paint application and adhering by baking, as for enamel painting.

In the ceramic paint, ceramic particles are dispersed and suspended in the silicone binder. The silicone binder, containing a large amount of organic groups such as the methyl group, adheres properly to an electrical conductor.

According to general handling processes, when the electrical wire has a diameter less than 0.6 mm, the applying unit may be a horizontal furnace, whilst when the diameter is larger than 0.6 mm, a vertical furnace may be used.

This principle may be applied for the baking and forming of the PBI coating or layer of the present invention, by choosing the type of furnace according to circumstances.

The application frequency, baking temperature, application speed, etc. of the ceramic paint may also be appropriately modified depending on the type of paint to be baked and the type of baking furnace, as in the case of PBI baking. The application frequency in the present invention may vary from once to several hundred times, but is more appropriately on the range of 2 to 20 times.

The baking temperature may be chosen between room temperature and 1,000°C, but is preferably between 350°C and 800°C. The application speed (line speed) may be chosen from 0.1 m/min to 1,000 m/min, but is preferably from 2 m/min to 200 m/min.

The appropriate solvents for the varnish of the present invention may include a non-polar solvent such as toluene, xylene, hexane or a hydrogen-bonding shielding solvent such as dimethylsulfoxide (DMSO). The concentration of varnish may be chosen from 1% to 80% (w/v), but is preferably from 5% to 40% (w/v). To improve the appearance of the wire, a thixotropy-enhancing agent may be added to the ceramic paint.

In the extrusion coating method, the composition of the ceramic paste to be used may vary depending on extrusion conditions. When an aluminium-based ceramic is used, a base medium is prepared by mixing alumina powder and a flux consisting of, for example, by weight %, 32.6 % of talc, 43.4 % of kaolin and 24.0 % of felspar. To this is added a binder containing asphalt, a synthetic lacquer, stearic acid, pine oil, naphtha, pine tar, glycerin, and a thermosetting resin such as bakelite.

According to one embodiment, a resin, a lacquer and alumina powder are weighed in a predetermined quantity and mixed for 10 minutes, to obtain a first mixture.

The above-mentioned flux is then added to the first mixture and further mixed for about 5 minutes. To the resulting mixture are added stearic acid, pine oil, naphtha and glycerin, which are mixed in for about 20 minutes, to obtain a preparation.

The preparation is weighed, filled into a cylinder heated at 118 to 123°C, and injected into a mould kept at 40°c by water-cooling, under a pressure of 910 to 1,260 kg/cm².

The resultant casting is put under pressure for 3 seconds, removed from the mould, smoothed by a high-speed grinder to remove burrs, and dried over 5 days at a temperature gradually increasing from 65°C to 320°C.

In another embodiment, a thermoplastic resin such as polyvinylbutyral, polypropylene, a solvent such as methylethylketone, ethyl alcohol, n-butyl alcohol, a plasticising agent such as di-n-butyl phthalate or the like and an animal oil as dispersing agent are added to the base medium. The quantity of these compounds to be used varies depending on the type or the particle size of the starting powder material chosen. A preparation may contain, by weight, for example, 100 parts of base medium, 5 to 15 parts of resin as binder agent, 40 to 60 parts of solvent, about 10 parts of plasticiser and about 1 part of animal oil. These components are mixed according to the order as described for the previous embodiment, to obtain a mixture paste. The paste is injected at 130 to 160 °C into a mould having a temperature of 40 to 60°C under a pressure of 200 to 600 kg/cm².

The extrusion rate (line speed) may vary from 1 m/min to 1,000 m/min, but is preferably between 10 m/min and 200 m/min. The extrusion temperature may be chosen appropriately between room temperature and 350 °C.

Embodiments of the present invention are shown hereinafter. Percentages indicated are % by weight unless otherwise stated.

### Example 1

A nickel-chromium wire having a diameter of 0.5 mm was soaked or dipped in a varnish solution consisting of 30 parts of polymer PBI and 70 parts of solvent DMA, whereby the varnish solution was applied to the wire. The varnish was adhered to the wire by baking at a line speed of 20 m/min at 350 °C. The above procedure was repeated 8 times to obtain a PBI film-coated, nickel-chromium wire.

An alumina-varnish solution was prepared by dispersing alumina, partially mixed with aluminium metal, in a silicone binder. More specifically, the silicone binder contains, as base polymers, organopolysiloxanes where siloxane bonding Si-O-Si constitutes a polymer skeleton and organic groups are bonded to the silicon atoms. Then a ceramic of formula MₖO_{I} having high melting temperature is dispersed in these base polymers.

The alumina-varnish solution prepared from the above silicone binder may contain 20 % of alumina, 15 % of toluene and 15 % of xylene, the rest being an organopolysiloxane polymer.

The above PBI film-coated wire was dipped in the alumina varnish solution, so that the solution was applied to the surface of the PBI film. The varnish was then adhered on the PBI coated wire by baking at a line speed of 10 m/min at 350 °C. The above procedure was repeated 4 times to obtain a nickel-chromium wire successively coated with a PBI, then with an alumina-organopolysiloxane coating.

### Example 2

A nickel-chromium wire having a diameter of 0.5 mm was soaked in a varnish solution consisting of 30 parts of polymer PBI and 70 parts of solvent DMA, whereby the varnish solution was applied to the wire. The varnish was adhered thereto by baking at a line speed of 20 m/min at 350 °C. The above procedure was repeated 8 times to obtain a PBI film-coated, nickel-chromium wire.

A base medium was prepared by mixing 85.4% of a fine alumina powder with 14.6% of flux consisting of 32.6 % of talc, 43.4% of kaolin and 24.0% of felspar. To this was added a binding agent containing asphalt, a synthetic lacquer, stearic acid, pine oil, naphtha, pine tar, glycerin and a thermosetting resin such as bakelite. The mixture paste thus obtained was extruded around the PBI-coated nickel-chromium wire at an extrusion speed (line speed) of 10 m/min at 200 °C. After solvents were distilled away, the resultant coating was baked at 400 °C or above and then cooled to obtain a nickel-chromium wire successively coated with a PBI and an alumina coating.

### Example 3

An oxygen-free copper wire having a diameter of 0.5 mm was soaked in a varnish solution consisting of 30 parts of polymer PBI and 70 parts of solvent DMA, the varnish solution further comprising 0.1 weight % by volume of AIBN initiator, whereby the varnish solution was applied to the wire. The vamish was adhered thereto by baking at a line speed of 50 m/min at 600°C. The above procedure was repeated 8 times to obtain a PBI film-coated copper wire.

The PBI-coated copper wire was dipped in an aluminium-containing varnish solution prepared as indicated in Example 1, so that the solution was applied to the surface of PBI-coated wire. The varnish was then adhered to the surface by baking at a line speed of 10 m/min at 400 °C. The above procedure was repeated 3 times to obtain a copper wire successively coated with a PBI and an alumina-organopolysiloxane coating.

### Example 4

A nickel-plated copper wire having an external diameter of 0.5 mm was soaked in a varnish solution consisting of 30 parts of polymer PBI and 70 parts of solvent DMA, the varnish solution further comprising 0.1 weight % by volume of AIBN initiator, whereby the varnish solution was applied to the wire. The varnish was adhered to the wire by baking at a line speed of 50 m/min at 600 °C. The above procedure was repeated 8 times to obtain a nickel-plated copper wire coated with a PBI film.

An extrusion paste was prepared as indicated in Example 2. The paste thus obtained was extruded around the PBI coated nickel-plated copper wire at a speed (line speed) of 10 m/min at 200 °C. After solvents were distilled away, the extruded wire coating was baked at 400 °C or above and then cooled to obtain a nickel-plated copper wire, successively coated with a PBI and an alumina coating.

### Example 5

A nickel-plated copper wire having an external diameter of 0.5 mm was soaked in a varnish solution consisting of 30 parts of polymer PBI, 60 parts of solvent DMA and 10 parts of solvent DMSO, the varnish solution further comprising 0.1 weight % by volume of AIBN initiator, whereby the varnish solution was applied to the wire. The varnish was then adhered to the wire by baking at a line speed of 20 m/min at 600 °C. The above procedure was repeated 8 times to obtain a nickel-plated copper wire coated with a PBI film.

An extrusion paste was prepared as indicated in Example 2. The paste thus obtained was extruded around the PBI coated nickel-plated copper wire at an extrusion speed (line speed) of 20 m/min at 300 °C. After solvents were distilled away, the extruded wire was baked at 400 °C or more and then cooled to obtain a nickel-plated copper wire, successively coated with a PBI and an alumina coating.

### Example 6

An oxygen-free copper wire having a diameter of 0.36 mm was soaked in a varnish solution consisting of 20 parts of polymer PBI and 80 parts of solvent DMA, whereby the varnish solution was applied to the wire. The varnish was adhered to the wire by baking at a line speed of 10 m/min at 500 °C. The above procedure was repeated 10 times to obtain a PBI coated oxygen-free copper wire.

The PBI coated oxygen-free copper wire thus prepared was soaked in an alumina-varnish solution prepared as indicated in Example 1, to apply the varnish solution to the PBI coating. The varnish was adhered to the PBI coating by baking at a line speed of 10 m/min at 400 °C. The above procedure was repeated 3 times to obtain an oxygen-free copper wire, successively coated with a PBI and an alumina-organopolysiloxane coating.

### Example 7

A nickel-plated copper wire having an external diameter of 1.5 mm was soaked in a varnish solution consisting of 55 parts of polymer PBI and 45 parts of solvent DMA, whereby the varnish solution was applied to the wire. The varnish was adhered to the wire by baking at a line speed of 60 m/min at 700 °C. The above procedure was repeated 20 times to obtain a PBI coated nickel-plated copper wire.

The PBI coated nickel-plated copper wire was then soaked in a tin oxide varnish solution containing 20% of tin oxide, 20% of toluene and 20% of xylene, the rest being organopolysiloxane polymer. The varnish thus coated was adhered to the PBI coating by baking at a line speed of 15 m/min at 450 °C. The above procedure was repeated 4 times to obtain a nickel-plated copper wire, successively coated with a PBI and a tin oxide-organopolysiloxane coating.

### Example 8

A nickel-plated copper wire having an external diameter of 2.5 mm was soaked in a varnish solution consisting of 65 parts of polymer PBI and 35 parts of solvent DMA, whereby the varnish solution was applied to the wire. The varnish was adhered thereto by baking at a line speed of 30 m/min at 600 °C. The above procedure was repeated 15 times to obtain a PBI coated nickel-plated copper wire.

The PBI coated nickel-plated copper wire was then soaked in an alumina varnish solution containing 20 % of alumina, 15 % of toluene and 15 % of xylene, the rest being organopolysiloxane polymer. The varnish was adhered to the PBI coating by baking at a line speed of 10 m/min at 350 °C. The above procedure was repeated 3 times to obtain a nickel-plated copper wire, successively coated with a PBI and an alumina-organopolysiloxane coating.

### Example 9

A nickel-copper alloyed wire having a diameter of 1.5 mm was soaked in a varnish solution consisting of 55 parts of polymer PBI and 45 parts of solvent DMA, whereby the varnish solution was applied to the wire. The varnish was adhered to the wire by baking at a line speed of 30 m/min at 500 °C. The above procedure was repeated 20 times to obtain a PBI coated nickel-copper alloyed wire.

The PBI coated nickel-plated copper wire was then soaked in a varnish solution containing 18 % of silver oxide, 15 % of toluene and 10 % of xylene, the rest being organopolysiloxane polymer. The varnish was adhered to the PBI coating by baking at a line speed of 17 m/min at 450 °C. The above procedure was repeated 4 times to obtain a nickel-copper alloyed wire, successively coated with a PBI and a silver oxide-organopolysiloxane coating.

### Example 10

An oxygen-free copper wire having a diameter of 0.36 mm was prepared. Copolymer ethylene-tetrafluoroethylene (ETFE) was extruded therearound at a rate of 15 m/min at 330°C to obtain an oxygen-free copper wire coated with ETFE. The wire thus obtained was soaked in a varnish solution consisting of 20 parts of PBI and 80 parts of DMA, whereby the varnish solution was applied to the ETFE coating. The varnish was then adhered to the wire by baking at a line speed of 10 m/min at 500 °C. The above procedure was repeated 10 times to obtain an oxygen-free copper wire, successively coated with an ETFE, then with a PBI coating.

The wire thus prepared was further soaked in an alumina-varnish solution prepared as indicated in Example 1, whereby the alumina-varnish solution was applied to the PBI surface. The varnish was then adhered to the wire by baking at a line speed of 10 m/min at 400 °C. The procedure was repeated 3 times to obtain an oxygen-free copper wire, successively coated with an ETFE, a PBI and an alumina-organopolysiloxane coating.

The oxygen-free copper wire, successively coated with an ETFE, a PBI and an alumina-organopolysiloxane coating, has a high heat resistance and can be used at temperatures above 350°C. It also has a high dielectric breakdown value.

### Comparative example 11

A nickel-chromium wire having a diameter of 0.5 mm was soaked in a varnish solution consisting of 30 parts of polymer PBI and 70 parts of solvent DMA, whereby the varnish solution was applied to the wire. The varnish was adhered to the wire by baking at a line speed of 20 m/min at 350°C. The above procedure was repeated 8 times to obtain a PBI-coated nickel-chromium wire.

Copolymer of tetrafluoroethylene and hexafluoropropylene (hereinafter FEP) was extruded and adhered around the PBI-coated wire under the following conditions: reduction ratio 16.3%; drawing balance (speed balance between outer and inner tube surfaces when coating a wire by tubing extrusion): 1.0; extrusion rate 10 m/min; cylinder temperature 260 to 320°C; and the copolymer was then cooled. A PBI-coated nickel-chromium wire, further coated with a fluorine-rubber type, FEP coating was thus obtained.

Each of the above-prepared samples was submitted to physical testing. The results obtained are represented in Tables 1 and 2.

As is seen in Tables 1 and 2, all the samples show a high heat resistance and a high dielectric breakdown value.

As regards the nickel-chromium wire illustrated in Example 1, an ageing test was effected on the two-layer (PBI and alumina-organopolysiloxane)-coated wire and the one-layer(PBI)-coated wire, at 300°C for 24 hours under atmospheric conditions.

Table 3 shows the results of the test. In the nickel-chromium wire coated merely with the PBI-film, the initial dielectric breakdown value (in kV) of 2.1 decreased to 1.9 after ageing. In the case of the PBI and alumina-organopolysiloxane alumina-organopolysiloxane coated nickel-chromium wire, the coating deteriorated after the ageing. However, when the alumina-organopolysiloxane coating was stripped off, the underlying PBI film showed its initial dielectric breakdown value (kV) of 2.2 was maintained. The same tendency was observed in Examples 2 to 10.

Table 4 shows a comparative ageing test effected on the ceramic-finished, PBI-coated wire of Example 1 and on the fluorine-rubber finished, PBI-coated wire of Example 11.

As can be seen, the product of Example 1 shows a higher breakdown voltage value than that of comparative example 11.

The examples 1 to 9 mentioned above are concerned with a bare electric wire 11 coated with a PBI coating 12 and further coated with a ceramic coating 13, as shown in Fig. 1. However, as shown in Figure 2, the starting wire may be an already coated wire 21 comprised of a main wire 22 and an insulating coating 23. This wire 21 may be coated with a PBI coating 24 and further with a ceramic coating 25. Such a product is illustrated in Example 10, showing generally improved physical properties.

In the present invention, the use of the above mentioned film or coating is not limited to heat-resistant electrical wires. The same two-layer structure may be used more generally as a heat-proof insulation material independently of such a wire. This material may comprise: a first layer consisting of PBI, having a first face adapted to confront a substrate and a second face; and a second layer consisting of ceramic, covering said second face of the first layer.

In the heat-proof electric wires or heat-resistant insulating materials according to the invention, even when they are used in very severe conditions, the PBI coating or layer may be prevented from a direct contact with air, whereby advantageous features of the polymer PBI such as heat resistance are retained intact.

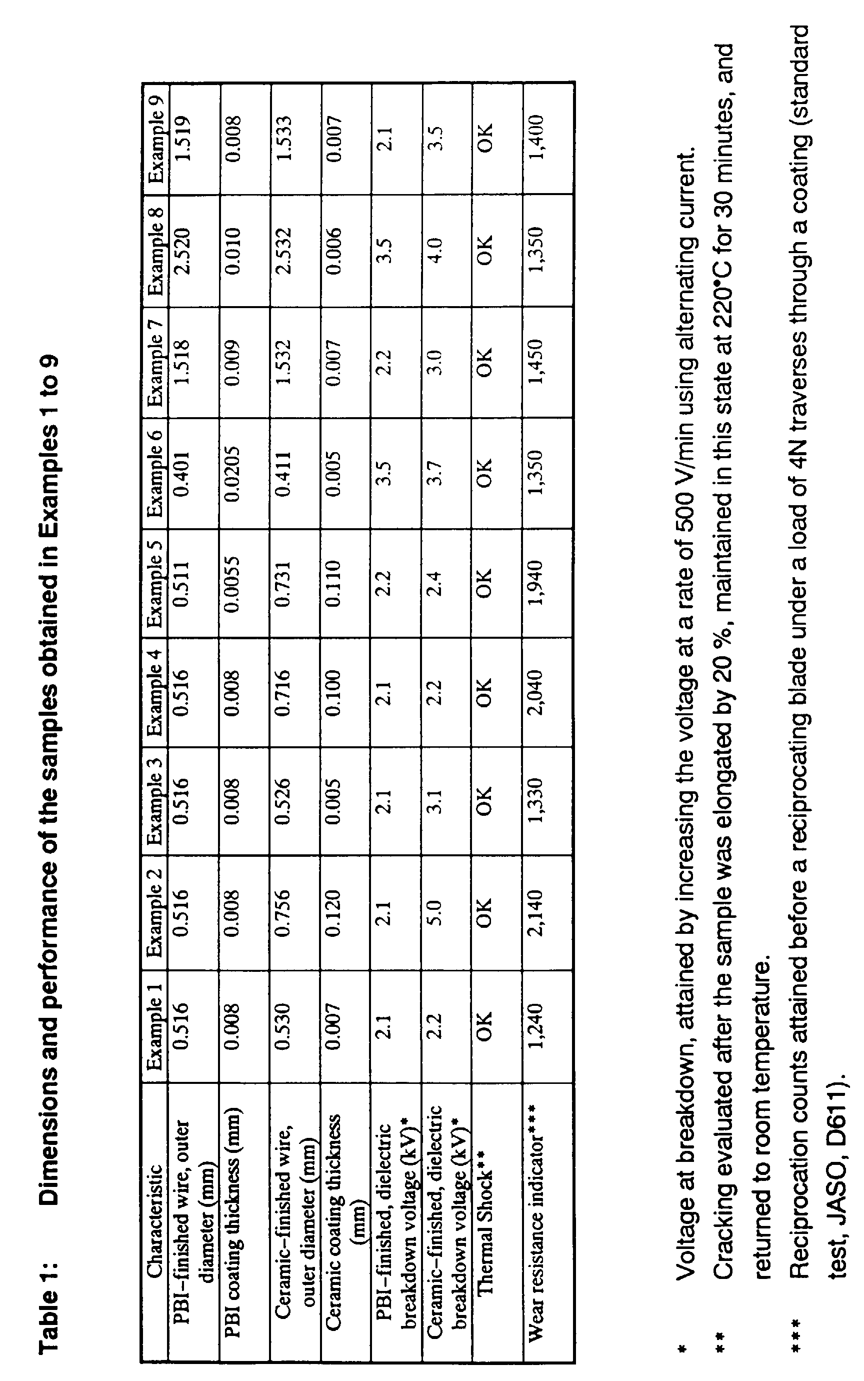

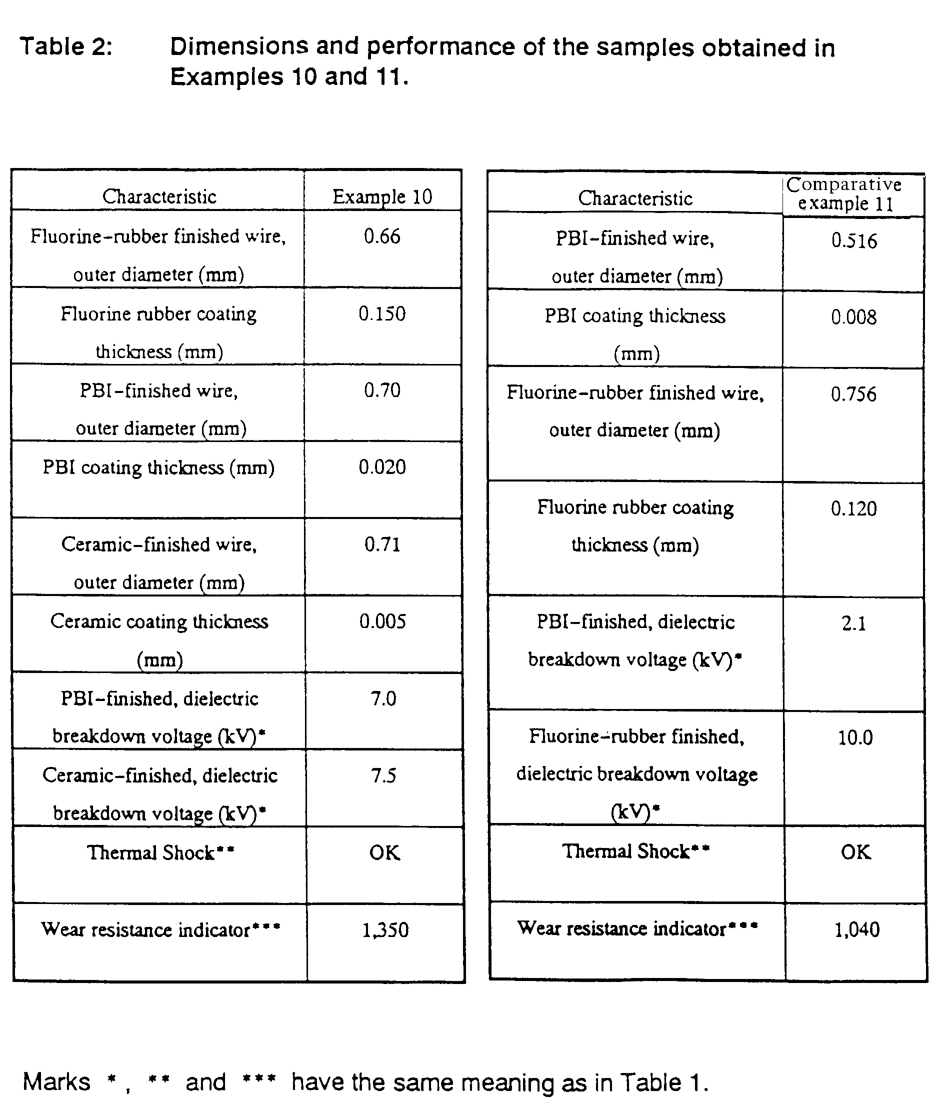

**Table 3:**

| **Ageing test effected on the samples obtained in Example 1** | | |
|---|---|---|
| Dielectric breakdown (kV)* | PBI- and ceramic-coatings finished | PBI-coating finished |
| Before ageing | 2.2 | 2.1 |
| After ageing** | 2.2 | 1.9 |

| | | |
|---|---|---|
| * Measured on the PBI coating | | |
| ** Aged at 300°C for 24 h | | |

**Table 4:**

| **Ageing test effected on the samples obtained in Examples 1 and 11** | | | |
|---|---|---|---|
| Dielectric breakdown (kV)* | Example 1 | Comparative example 11 | PBI-coating finished |
| Before ageing | 2.1 | 2.1 | 2.1 |
| After ageing** | 2.1 | 0.5 | 0.3 |

| | | | |
|---|---|---|---|
| * Measured on the PBI coating | | | |
| ** Aged at 350°C for 24 h | | | |

## Claims

1. A heat-resistant insulating material for an element containing at least an electrically conductive part, said material comprising a first layer comprised of a benzimidazole-based polymer, said layer having a first face adapted to confront said element, and a second face,
characterised in that said material further comprises a second layer comprised of a ceramic material, said second layer being securely fixed to said second face of the first layer.

2. A heat-resistant insulating material according to claim 1, wherein said second layer is comprised of a ceramic material and a silicon-containing compound.

3. A heat-resistant insulating material according to claim 1 or 2, wherein said benzimidazole-based polymer comprises a product obtainable by reacting a plurality of benzimidazole-based polymers of formula (I): 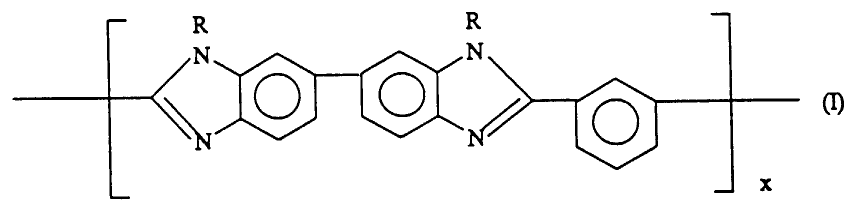 where R indicates either a hydrogen atom or an alkyl group having 1 to 4 carbon atoms, and x indicates an integer equal to at least 5 and chosen to yield solvent-soluble polymers.

4. A heat-resistant insulating material according to any one of claims 1 to 3, wherein said ceramic material comprises a compound represented by formula (II):
MₖO_{I} (II)
where M, O, k and I indicate respectively a metallic element, an oxygen atom, an integer of either 1 or 2, and an integer of either 1, 2 or 3.

5. A heat-resistant insulating material according to anyone of claims 1 to 4, wherein said element containing at least an electrically conductive part is either an electrical wire or an electrical wire coated with an insulating layer.

6. A heat-resistant electrical wire (10, 20) comprising:
- a wire portion (11, 21) containing at least an electrically conductive part (11, 22);
- a first coating (12, 24) comprised of a benzimidazole-based polymer, said coating (12, 24) circumferentially coating said wire portion (11, 21);
characterised in that said heat-resistant electrical wire (10, 20) further comprises:
- a second coating (13, 25) comprised of a ceramic material, said second coating (13, 25) circumferentially coating said first coating (12, 24); said wire portion (11, 21), said first coating (12, 24) and said second coating (13, 25) being securely fixed.

7. A heat-resistant electrical wire (10, 20) according to claim 6, wherein said second coating (13, 25) is comprised of a ceramic material and a silicon-containing compound.

8. A heat-resistant electrical wire (10, 20) according to claim 6 or 7, wherein said benzimidazole-based polymer comprises a product obtainable by reacting a plurality of benzimidazole-based polymers of formula (I): 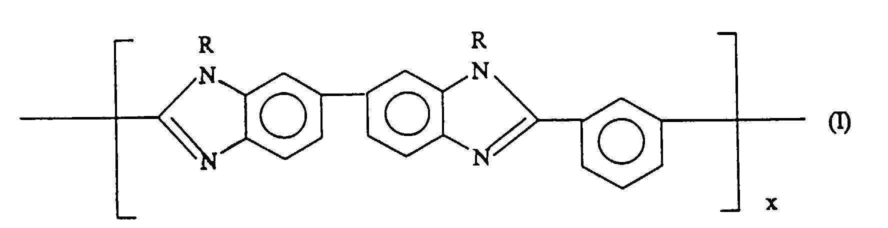 where R indicates either a hydrogen atom or an alkyl group having 1 to 4 carbon atoms, and x indicates an integer equal to at least 5 and chosen to yield solvent-soluble polymers.

9. A heat-resistant electrical wire (10, 20) according to anyone of claims 6 to 8, wherein said ceramic material comprises a compound represented by formula (II):
MₖO_{I} (II)
where M, O, k and I indicate respectively a metallic element, an oxygen atom, an integer of either 1 or 2, and an integer of either 1, 2 or 3.

10. A heat-resistant electrical wire (10) according to anyone of claims 6 to 9, wherein the wire portion (11) containing at least an electrically conductive part is an electrical wire.

11. A heat-resistant electrical wire (20) according to anyone of claims 6 to 9, wherein the wire portion (21) containing at least an electrically conductive part (22) is an electrical wire coated with an insulating layer (23).

12. A method of manufacturing a heat-resistant insulating material for an element containing at least an electrically conductive part, said material comprising a first layer comprised of a product obtainable by reacting a plurality of benzimidazole-based polymers, said layer having a first face adapted to confront said element, and a second face; and a second layer comprised of a ceramic material, said method characterised by comprising the steps of:
a) preparing a varnish solution containing at least a plurality of benzimidazole-based polymers;
b) containing said solution in a shape adapted to confront said element;
c) reacting said plurality of benzimidazole-based polymers, thereby obtaining said first layer having said first and second faces; and
d) coating said second face of the first layer with said second layer comprised of a ceramic material, so as to be secured on said first layer.

13. A method of manufacturing a heat-resistant electrical wire (10, 20) of the type comprising: a wire portion (11, 21) containing at least an electrically conductive part (11, 22); a first coating (12, 24) comprised of a product obtainable by reacting a plurality of benzimidazole-based polymers, said first coating (12, 24) circumferentially covering said wire portion (11, 21); and a second coating (13, 25) comprised of a ceramic material, said second coating (13, 25) covering said first coating (12, 24), said method characterised by comprising the steps of:
a) preparing a vanish solution containing at least a plurality of benzimidazole-based polymers;
b) applying said solution to the circumferential surface of said wire portion (11 21);
c) reacting said plurality of benzimidazole-based polymers, thereby forming said first coating (12, 24) securely on said wire portion (11, 21);
d) repeating, where appropriate, steps b) and c), thereby reinforcing said first coating (12, 24); and
e) covering said first coating (12, 24) with said second coating (13, 25) comprised of a ceramic material, so as to be secured on said first coating (12, 24).

14. The method according to claim 12 or 13, further comprising the step of adding a radical-polymerisation initiating agent to said solution in step a), when said plurality of benzimidazole-based polymers has a low degree of polymerisation.

15. The method according to claim 13, wherein said step e) consists mainly in preparing a varnish solution containing at least a ceramic material, applying said ceramic varnish solution to said wire portion (11, 21) covered with said first coating (12, 24), baking said ceramic varnish solution and repeating, where appropriate, said application and baking, thereby reinforcing said second coating (13, 25).

16. The method according to claim 15, wherein said varnish solution is prepared from at least said ceramic material and an organic silicon-containing compound.

17. The method according to claim 13, wherein said step e) consists mainly in preparing a paste containing at least said ceramic material and extruding said paste around said first coating (12, 24).

18. The method according to claim 17, wherein said paste is prepared from at least said ceramic material and an inorganic silicon-containing compound.

19. Use of a heat-resistant electrical wire (10, 20) according to anyone of claims 6 to 11, as part of an electrical circuitry for an aircraft.

20. Use of a heat-resistant electrical wire (10, 20) according to anyone of claims 6 to 11, as part of an electrical circuitry for high voltage application.

21. Use of a heat-resistant electrical wire (10, 20) according to anyone of claims 6 to 11, as part of an electrical circuitry for communications applications.

22. Use of a heat-resistant electrical wire (10, 20) according to anyone of claims 6 to 11, as part of an electrical circuitry for an electrical heater.

## Patentansprüche

1. Wärmebeständiges Isolationsmaterial für eine Element, das mindestens ein elektrisch leitfähiges Teil enthält, wobei das Material eine erste, aus einem Polymer auf Benzimidazolbasis aufgebaute Schicht umfaßt, wobei die Schicht eine erste Oberfläche aufweist, die angepaßt ist, dem Element gegenüberzuliegen, und eine zweite Oberfläche aufweist, dadurch gekennzeichnet, daß das Material weiter eine zweite, ein keramisches Material umfassende Schicht umfaßt, wobei die zweite Schicht fest an der zweiten Oberfläche der ersten Schicht angebracht ist.

2. Wärmebeständiges Isolationsmaterial nach Anspruch 1, wobei die zweite Schicht ein keramisches Material und eine Silizium-enthaltende Verbindung umfaßt.

3. Wärmebeständiges Isolationsmaterial nach Anspruch 1 oder 2, wobei das Polymer auf Benzimidazolbasis ein Produkt umfaßt, das durch Umsetzung einer Vielzahl von Polymeren auf Benzimidazolbasis mit der Formel (I) erhältlich ist: 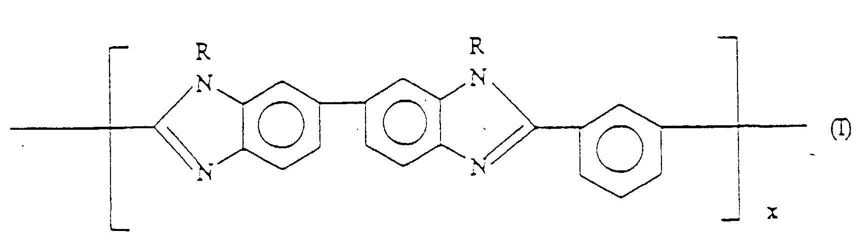 worin der Rest R entweder ein Wasserstoffatom oder eine Alkylgruppe mit 1 bis 4 Kohlenstoffatomen bedeutet und x eine ganze Zahl, die mindestens gleich 5 ist und ausgewählt ist, um in Lösungsmitteln lösliche Polymere zu ergeben.

4. Wärmebeständiges Isolationsmaterial nach einem der Ansprüche 1 bis 3, wobei das keramische Material eine Verbindung umfaßt, dargestellt durch die Formel (II):
MₖOₗ (II)
worin M, O, k und l ein Metallelement, ein Sauerstoffatom, eine ganz Zahl von entweder 1 oder 2 bzw. eine ganze Zahl von entweder 1, 2 oder 3 bedeuten.

5. Wärmebeständiges Isolationsmaterial nach einem der Ansprüche 1 bis 4, wobei das Element, das mindestens ein elektrisch leitfähiges Teil enthält, entweder ein elektrischer Draht oder ein mit einer Isolationsschicht beschichteter, elektrischer Draht ist.

6. Wärmebeständiger elektrischer Draht (10, 20), umfassend:
- ein Drahtteil (11, 21), das mindestens ein elektrisch leitfähiges Teil (11, 22) enthält;
- eine erste Beschichtung (12, 24), die ein Polymer auf Benzimidazolbasis umfaßt, wobei die Beschichtung (12, 24) das Drahtteil (11, 21) umfänglich bedeckt;
dadurch gekennzeichnet, daß der wärmebeständige elektrische Draht (10, 20) weiter umfaßt:
- eine zweite Beschichtung (13, 25), die ein keramisches Material umfaßt, wobei die zweite Beschichtung (13, 25) die erste Beschichtung (12, 24) umfänglich bedeckt;
- und wobei das Drahtteil (11, 21), die erste Beschichtung (12, 24) und die zweite Beschichtung (13, 25) fest angebracht sind.

7. Wärmebeständiger elektrischer Draht (10, 20) nach Anspruch 6, wobei die zweite Beschichtung (13, 25) ein keramisches Material und eine Silizium-enthaltende Verbindung umfaßt.

8. Wärmebeständiger elektrischer Draht (10, 20) nach Anspruch 6 oder 7, wobei das Polymer auf Benzimidazolbasis ein Produkt umfaßt, das durch Umsetzung einer Vielzahl von Polymeren auf Benzimidazolbasis mit der Formel (I) erhältlich ist: 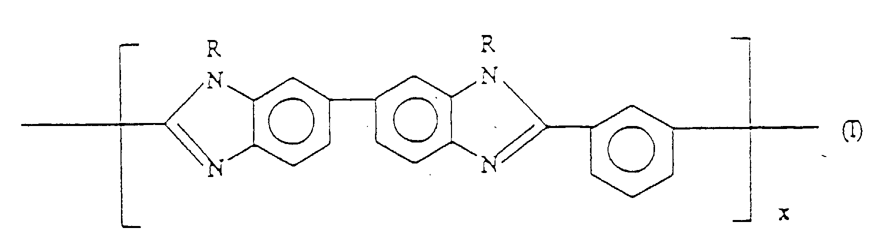 worin der Rest R entweder ein Wasserstoffatom oder eine Alkylgruppe mit 1 bis 4 Kohlenstoffatomen bedeutet und x eine ganze Zahl, die mindestens gleich 5 ist und ausgewählt ist, um in Lösungsmitteln lösliche Polymere zu ergeben.

9. Wärmebeständiger elektrischer Draht (10, 20) nach einem der Ansprüche 6 bis 8, wobei das keramische Material eine Verbindung umfaßt, dargestellt durch die Formel (II):
MₖOₗ (II)
worin M, O, k und l ein Metallelement, ein Sauerstoffatom, eine ganz Zahl von entweder 1 oder 2 bzw. eine ganze Zahl von entweder 1, 2 oder 3 bedeuten.

10. Wärmebeständiger elektrischer Draht (10, 20) nach einem der Ansprüche 6 bis 9, wobei das Drahtteil (11), das mindestens ein elektrisch leitfähiges Teil enthält, ein elektrischer Draht ist.

11. Wärmebeständiger elektrischer Draht (10, 20) nach einem der Ansprüche 6 bis 9, wobei das Drahtteil (21), das mindestens ein elektrisch leitfähiges Teil (22) enthält, ein mit einer Isolationsschicht (23) beschichteter, elektrischer Draht ist.

12. Verfahren zur Herstellung eines wärmebeständigen Isolationsmaterials für ein Element, das mindestens ein elektrisch leitfähiges Teil enthält, wobei das Material eine erste Schicht, die ein Produkt umfaßt, das durch Umsetzen einer Vielzahl von Polymeren auf Benzimidazolbasis erhältlich ist, wobei die Schicht eine erste Oberfläche aufweist, die angepaßt ist, dem Element gegenüberzuliegen, und eine zweite Oberfläche aufweist, und eine zweite Schicht umfaßt, die ein keramisches Material umfaßt, wobei das Verfahren dadurch gekennzeichnet ist, daß es die Schritte umfaßt:
(a) Herstellen einer Lacklösung, die mindestens eine Vielzahl von Polymeren auf Benzimidazolbasis enthält;
(b) Aufnehmen dieser Lösung in eine Form, die angepaßt ist, dem Element gegenüberzuliegen;
(c) Umsetzen der Vielzahl von Polymeren auf Benzimidazolbasis, wodurch die erste Schicht mit der ersten und zweiten Oberfläche erhalten wird; und
(d) Beschichten der zweiten Oberfläche der ersten Schicht mit der zweiten Schicht, die ein keramisches Material umfaßt, so daß sie auf der ersten Schicht befestigt wird.

13. Verfahren zur Herstellung eines wärmebeständigen elektrischen Drahts (10, 20) von dem Typ, umfassend:
ein Drahtteil (11, 21), das mindestens ein elektrisch leitfähiges Teil (11, 22) enthält; eine erste Beschichtung (12, 24), die ein Produkt umfaßt, das durch Umsetzen einer Vielzahl von Polymeren auf Benzimidazolbasis erhätlich ist, wobei die erste Beschichtung (12, 24) das Drahtteil (11, 21) umfänglich bedeckt; und eine zweite Beschichtung (13, 25), die ein keramisches Material umfaßt, wobei die zweite Beschichtung (13, 25) die erste Beschichtung (12, 24) bedeckt, dadurch gekennzeichnet, daß das Verfahren die Schritte umfaßt:
(a) Herstellen einer Lacklösung, die mindestens eine Vielzahl von Polymeren auf Benzimidazolbasis enthält;
(b) Aufbringen der Lösung auf die umfängliche Oberfläche des Drahtteils (11, 21);
(c) Umsetzen der Vielzahl von Polymeren auf Benzimidazolbasis, wodurch die erste Beschichtung (12, 24) fest auf dem Drahtteil (11, 21) gebildet wird;
(d) Wiederholen, wenn angemessen, der Schritte (b) und (c), wodurch die erste Beschichtung (12, 24) verstärkt wird; und
(e) Bedecken der ersten Beschichtung (12, 24) mit der zweiten, ein keramisches Material umfassenden Beschichtung (13, 25), so daß sie auf der ersten Beschichtung (12, 24) befestigt wird.

14. Verfahren nach Anspruch 12 oder 13, weiter umfassend den Schritt des Zugebens eines eine Radikalpolymerisation startenden Mittels zu der Lösung in Schritt (a), wenn die Vielzahl von Polymeren auf Benzimidazolbasis einen niederen Polymerisationsgrad aufweist.

15. Verfahren nach Anspruch 13, wobei der Schritt (e) hauptsächlich aus dem Herstellen einer Glasurlösung, die mindestens ein keramisches Material enthält, dem Aufbringen der keramischen Glasurlösung auf das Drahtteil (11, 21), das mit der ersten Beschichtung (12, 24) bedeckt ist, dem Erhitzen der keramischen Glasurlösung und dem Wiederholen, wenn angemessen, des Aufbringens und Erhitzens, wodurch die zweite Beschichtung (13, 25) verstärkt wird, besteht.

16. Verfahren nach Anspruch 15, wobei die Glasurlösung aus mindestens einem keramischen Material und einer organischen Silizium-enthaltenden Verbindung hergestellt ist.

17. Verfahren nach Anspruch 13, wobei der Schritt (e) hauptsächlich aus dem Herstellen einer Paste, die mindestens das keramische Material enthält, und dem Extrudieren der Paste um die erste Beschichtung (12, 24) besteht.

18. Verfahren nach Anspruch 17, wobei die Paste aus mindestens dem keramischen Material und einer anorganischen Silizium-enthaltenden Verbindung hergestellt ist.

19. Verwendung eines wärmebeständigen elektrischen Drahts (10, 20) nach einem der Ansprüche 6 bis 11 als Teil eines elektrischen Stromkreises für ein Flugzeug.

20. Verwendung des wärmebeständigen elektrischen Drahts (10, 20) nach einem der Ansprüche 6 bis 11 als Teil eines elektrischen Stromkreises für Hochspannungsanwendungen.

21. Verwendung eines wärmebeständigen elektrischen Drahts (10, 20) nach einem der Ansprüche 6 bis 11 als Teil eines elektrischen Stromkreises für Kommunikationsanwendungen.

22. Verwendung des wärmebeständigen elektrischen Drahts (10, 20) nach einem der Ansprüche 6 bis 11 als Teil eines elektrischen Schaltkreises für einen elektrischen Heizkörper.

## Revendications

1. Matière isolante résistant à la chaleur, pour un élément contenant au moins une partie électriquement conductrice, ladite matière comportant une première couche comprenant un polymère à base de benzimidazole, ladite coucha présentant une première face, apte à être placée en regard dudit élément, et une seconde face, caractérisée en ce que la matière comporte en outre une seconde couche comprenant une matière céramique, la seconde couche étant fixée d'une manière sûre sur la seconde face de la première couche.

2. Matière isolante résistant à la chaleur suivant la revendication 1, dans laquelle la seconde couche comprend une matière céramique et un composé contenant du silicium.

3. Matière isolante résistant à la chaleur suivant la revendication 1 ou 2, dans laquelle le polymère à base de benzimidazole comprend un produit pouvant être obtenu en faisant réagir plusieurs polymères à base de benzimidazole de formule (I) : 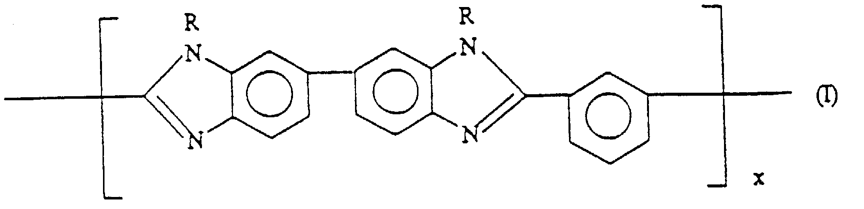 dans laquelle R désigne soit un atome d'hydrogène, soit un groupe akyl contenant 1 à 4 atomes de carbone et x désigne un nombre entier égal au moins à 5 et choisi de façon à donner des polymères solubles dans un solvant.

4. Matière isolante résistant à la chaleur suivant l'une quelconque des revendications 1 à 3, dans laquelle la matière céramique comprend un composé représenté par la formule (II) :
MₖOₗ (2)
dans laquelle M, O, k et l désignent respectivement un élément métallique, un atome d'oxygène, un nombre entier valant 1 ou 2 et un nombre entier valant 1, 2 ou 3.

5. Matière isolante résistant à la chaleur suivant l'une quelconque des revendications 1 à 4, dans laquelle l'élément contenant au moins une partie électriquement conductrice est soit un fil électrique, soit un fil électrique revêtu d'une couche isolante.

6. Fil électrique résistant à la chaleur (10, 20) comportant :
- une partie formant fil (11, 21) contenant au moins une partie électriquement conductrice (11, 22);
- un premier revêtement (12, 24) comprenant un polymère à base de benzimidazole, ledit revêtement (12, 24) revêtant d'une manière cylindrique la partie formant fil (11, 21) ;
caractérisé en ce que le fil électrique résistant à la chaleur (10, 20) comporte en outre :
- un second revêtement (13, 25) comprenant une matière céramique, ledit second revêtement (13, 25) revêtant d'une manière cylindrique le premier revêtement (12, 24) ; la partie formant fil (11, 21), le premier revêtement (12, 24) et le second revêtement (13, 25) étant fixés d'une manière sûre.

7. Fil électrique résistant à la chaleur (10, 20) suivant la revendication 6, dans lequel le second revêtement (13, 25) comprend une matière céramique et un composé contenant du silicium.

8. Fil électrique résistant à la chaleur (10, 20) suivant la revendication 6 ou 7, dans lequel le polymère à base de benzimidazole comprend un produit pouvant être obtenu en faisant réagir plusieurs polymères à base de benzimidazole de formule (I) : 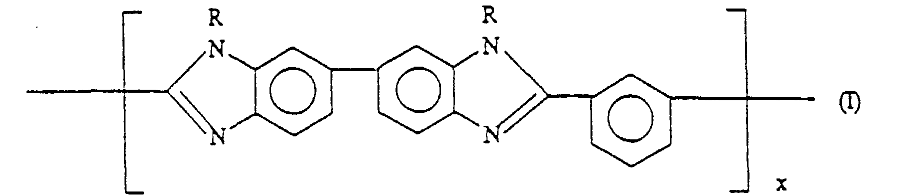 dans laquelle R désigne soit un atome d'hydrogène, soit un groupe akyl contenant 1 à 4 atomes de carbone et x désigne un nombre entier égal au moins à 5 et choisi de façon à donner des polymères solubles dans un solvant.

9. Fil électrique résistant à la chaleur (10, 20) suivant l'une quelconque des revendications 6 à 8, dans lequel la matière céramique comprend un composé représenté par la formule (II) :
MₖOₗ (2)
dans laquelle M, O, k et l désignent respectivement un élément métallique, un atome d'oxygène, un nombre entier valant 1 ou 2 et un nombre entier valant 1, 2 ou 3.

10. Fil électrique résistant à la chaleur (10) suivant l'une quelconque des revendications 6 à 9, dans lequel la partie formant fil (11) contenant au moins une partie électriquement conductrice est un fil électrique.

11. Fil électrique résistant à la chaleur (20) suivant l'une quelconque des revendications 6 à 9, dans lequel la partie formant fil (21) contenant au moins une partie électriquement conductrice (22) est un fil électrique revêtu d'une couche isolante (23).

12. Procédé de fabrication d'une matière isolante résistant à la chaleur pour un élément contenant au moins une partie électriquement conductrice, ladite matière comportant une première couche comprenant un produit pouvant être obtenu en faisant réagir plusieurs polymères à base de benzimidazole, ladite couche présentant une première face apte à être placée en regard dudit élément, et une seconde face ; et une seconde couche comprenant une matière céramique, le procédé étant caractérisé en ce qu'il comprend les opérations consistant :
a) à préparer une solution de vernis contenant au moins plusieurs polymères à base de benzimidazole;
b) à maintenir la solution dans une forme apte à être placée en regard dudit élément ;
c) à faire réagir plusieurs polymères à base de benzimidazole, en obtenant ainsi ladite première couche présentant les première et seconde faces ; et
d) à revêtir la seconde face de la première couche au moyen de ladite seconde couche comprenant une matière céramique, de façon qu'elle soit fixée sur la première couche.

13. Procédé de fabrication d'un fil électrique résistant à la chaleur (10, 20) du type comportant :
une partie formant fil (11, 21) contenant au moins une partie électriquement conductrice (11, 22);
un premier revêtement (12, 24) comprenant un produit pouvant être obtenu en faisant réagir plusieurs polymères à base de benzimidazole, ledit premier revêtement (12, 24) couvrant d'une manière cylindrique la partie formant fil (11, 21) ; et
un second revêtement (13, 25) comprenant une matière céramique, ledit second revêtement (13, 25) couvrant le premier revêtement (12, 24), le procédé étant caractérisé en ce qu'il comprend les opérations consistant :
a) à préparer une solution de vernis contenant au moins plusieurs polymères à base de benzimidazole;
b) à appliquer la solution sur la surface cylindrique de la partie formant fil (11, 21) ;
c) à faire réagir les multiples polymères à base de benzimidazole, en formant ainsi le premier revêtement (12, 24) d'une manière sûre sur la partie formant fil (11, 21) ;
d) à répéter, lorsque cela est approprié, les opérations b) et c), en renforçant ainsi le premier revêtement (12, 24) ; et
e) à couvrir le premier revêtement (12, 24) au moyen du second revêtement (13, 25) comprenant une matière céramique, de façon qu'il soit fixé sur le premier revêtement (12, 24).

14. Procédé suivant la revendication 12 ou 13, comprenant en outre l'opération consistant à ajouter un agent initiateur de polymérisation de radicaux à la solution dans l'opération a), lorsque les multiples polymères à base de benzimidazole ont un faible degré de polymérisation.

15. Procédé suivant la revendication 13, selon lequel l'opération e) consiste principalement à préparer une solution de vernis contenant au moins une matière céramique, à appliquer la solution de vernis de céramique à la partie formant fil (11, 21) couverte par le premier revêtement (12, 24), à cuire la solution de vernis de céramique et à répéter, lorsque cela est approprié, l'application et la cuisson, en renforçant ainsi le second revêtement (13, 25).

16. Procédé suivant la revendication 15, selon lequel la solution de vernis est préparée à partir d'au moins ladite matière céramique et d'un composé organique contenant du silicium.

17. Procédé suivant la revendication 13, selon lequel l'opération e) consiste principalement à préparer une pâte contenant au moins ladite matière céramique et à extruder la pâte autour du premier revêtement (12, 24).

18. Procédé suivant la revendication 17, selon lequel la pâte est préparée à partir au moins de ladite matière céramique et d'un composé non organique contenant du silicium.

19. Utilisation d'un fil électrique résistant à la chaleur (10, 20) suivant l'une quelconque des revendications 6 à 11, en tant que partie d'un circuit électrique pour aéronef.

20. Utilisation d'un fil électrique résistant à la chaleur (10, 20) suivant l'une quelconque des revendications 6 à 11, en tant que partie d'un circuit électrique pour une application à haute tension.

21. Utilisation d'un fil électrique résistant à la chaleur (10, 20) suivant l'une quelconque des revendications 6 à 11, en tant que partie d'un circuit électrique pour des applications de communication.

22. Utilisation d'un fil électrique résistant à la chaleur (10, 20) suivant l'une quelconque des revendications 6 à 11, en tant que partie d'un circuit électrique pour dispositif de chauffage électrique.
